Europäisches Patentamt

(19) European Patent Office                    (11) Publication number:      **0 060 109**

Office européen des brevets                                              **A1**

(12)                    **EUROPEAN PATENT APPLICATION**

(21) Application number: **82301144.0**          (51) Int. Cl.³: **F 04 D 29/12**
                                                        **F 16 J 15/36**
(22) Date of filing: **05.03.82**

(30) Priority: **09.03.81 GB 8107380**            (71) Applicant: **SKF (U.K.) LIMITED**
                                              **Sundon Park Road**
                                              **Luton, Bedfordshire(GB)**

(43) Date of publication of application:
   **15.09.82 Bulletin 82/37**                 (72) Inventor: **Evans, Terence Aubrey**
                                              **37 The Coppins**
                                              **Ampthill Bedford MK45 2SW(GB)**
(84) Designated Contracting States:
   **DE FR IT**                                (74) Representative: **McCulloch, Norman Little et al,**
                                              **Mathys & Squire 10 Fleet Street**
                                              **London EC4Y 1AY(GB)**

(54) Shaft seals for rotary pumps.

(57) A rotary pump has an end face seal (16) comprising an expandable tubular housing fitted on the stationary outer bearing ring (20) of the spindle and a collar (30) mounted on the rotatable spindle (12) as a fluid-tight fit against the impeller hub, the housing having an annular sealing face in sliding contact with a counter-sealing face on the collar. The housing is formed with apertures in fluid-tight communication with a duct in the pump body for drainage of any fluid which leaks past the sealing faces. A retaining sleeve (36) fast with the collar extends into the expandable housing and acts as a flinger for throwing leakage fluid towards the drainage apertures in the housing.

FIG.1

- 1 -

This invention relates to rotary pumps and is concerned more particularly with improvements in the end face seals for such pumps. The invention is particularly applicable to water pumps for circulating cooling liquid in the engines of automobile vehicles.

Conventional constructions of automobile water circulating pumps consist of a pump body, a spindle assembly mounted in the pump body and fitted with an impeller and a drive pulley on opposite ends of the spindle for rotation therewith, and an end face seal mounted as a separate unit between the outer bearing ring and the hub of the impeller. The spindle assembly is a self-contained unit consisting of the spindle rotatably mounted in an outer bearing ring by two spaced-apart caged rows of balls and/or rollers,and radial seals mounted each end of the bearing outer ring to retain the lubricant within the spindle assembly. The end face seal comprises an axially expandable housing fitted with a spring tending to expand the housing, one end of the expandable housing being firmly secured to the pump body and the opposite end being provided with an annular sealing face in sliding engagement with a cooperating counter-sealing face on the hub of the impeller or on a collar mounted on the spindle in fluid-tight engagement with the hub of the impeller for rotation therewith. The end face seal is spaced from the outer bearing ring for reception therebetween of any water and water vapour which may leak past the cooperating annular sealing faces, the body of the pump having a duct for drainage of this fluid. The part of the spindle between the end face seal and the outer bearing ring is commonly fitted with a flinger, or this part of the spindle shaped to act as a flinger, arranged to throw any leakage liquid radially outwards toward the drainage duct in the pump body.

The conventional construction of water pump as described above must be assembled with care, since misalignment of the end face seal can cause excessive leakage of water which could result in premature failure of the bearing.

The object of the invention is to provide a rotary pump which is simpler to assemble than the conventional pump.

According to the invention there is provided a rotary pump comprising an impeller secured on a spindle rotatably mounted in a bearing in the body of the pump, the bearing comprising an outer bearing ring supported in the pump body and rolling elements rotatably mounting the spindle in the outer bearing ring, and sealing means for sealing the fluid within the pump, wherein the sealing means comprises an axially expandable tubular housing surrounding the spindle between the outer bearing ring and the impeller, and spring means urging the housing towards an expanded condition, one end of the expandable housing being secured as a fluid-tight fit on the outer bearing ring, and the other end of the expandable housing having an annular sealing face urged by said spring means into sliding contact with an annular counter-sealing face on the impeller or spindle, the expandable housing having one or more apertures in fluid-tight communication with a drainage duct in the pump body for drainage of any fluid which may leak past the cooperating sealing faces into the interior of the expandable housing, and the spindle, bearing and sealing means forming a self-contained assembly which can be fitted as a unit in the body of the pump during manufacture.

The rotary pump of the invention has the advantage over conventional constructions of pump that the number of separate units handled during assembly of the pump is reduced.

In the rotary pump of the invention, the end portion of the expandable housing adjacent the outer bearing ring is preferably a fluid-tight fit in a bore of the body of the pump, the aperture or apertures in the housing being formed in this end portion. The bearing ring can conveniently have an end section of reduced external diameter, and the adjacent end portion of the expandable housing formed with an annular flange mounted on the end section of the bearing ring, the bearing ring being mounted in a bore in the pump body and the annular flange on the housing compressed between the end section of the bearing ring and the wall of the bore.

The spindle assembly of a pump is generally provided with radial seals comprising a ring of elastomeric material having an annular lip in sliding contact with the spindle, and in a preferred construction of the rotary pump of the invention the end portion of the expandable housing adjacent the outer bearing ring is formed of elastomeric material and is integral with one of the radial seals. The elastomeric end portion of the expandable housing adjacent the outer bearing ring can conveniently be reinforced by a stiffener embedded therein, the stiffener extending into and reinforcing the elastomeric ring of the radial seal. This construction further reduces the number of items required to build the pump at the point of assembly.

In a rotary pump of the invention in which the fluid sealing means includes a collar mounted on the spindle as a fluid-tight fit against the hub of the impeller for rotation therewith, the collar having the annular counter-sealing face, and a retaining sleeve adapted to hold the expandable housing and collar together with the spring means in compression when the seal is not in use, the retaining sleeve is preferably fast with the collar and extends into the expandable housing so as to act as a flinger arranged to throw radially outwards toward the drainage aperture or apertures any fluid which may leak past the annular sealing faces. This construction has the advantage that it avoids the need to fit a separate flinger, or to shape the spindle during manufacture to function as a flinger.

Thus, according to the present invention there is further provided an end face seal for a rotary pump, comprising an axially expandable tubular housing one end portion of which is cylindrical and adapted to be mounted as a close fit in a bore in the pump body and the other end portion of which is formed with an annular sealing face, a collar having an annular counter-sealing face in sliding contact with the annular sealing face on the housing, spring means urging the expandable housing towards an axially expanded condition, and a retaining sleeve adapted to hold the housing and collar together with the spring means in compression when the seal is not in use, wherein the retaining sleeve

- 5 -

is fast with the collar and extends inside the expandable housing,
the sleeve being adapted to become disengaged from the housing
when the seal is fitted around the spindle assembly of a pump with
the collar mounted as a fluid-tight fit against the hub of the
impeller and the housing compressed between the collar and the
bearing ring, and the retaining sleeve being adapted to act as a
flinger arranged to throw radially outwards any fluid which may leak
past the annular sealing faces.

A rotary water pump fitted with different constructions of
seals in accordance with the invention will now be described, by way
of example, with reference to the accompanying drawings, in which like
parts are identified by like reference numerals and in which:

Figure 1 is an axial cross section of the pump,

Figure 2 is an axial cross-section on an enlarged scale of
part of the pump of Figure 1 showing details of the construction of the
seals,

Figure 3 is a view similar to Figure 2 showing another
construction of the seals, and

Figure 4 is a view similar to Figure 2 showing yet another
construction of the seals.

The water pump shown in the drawings comprises a body 10
having a suction chamber 11, a spindle 12 rotatably mounted in the
body by a bearing 13, an impeller 14 secured on one end of the spindle and arranged to pump water from the suction chamber 11 to a discharge chamber (not shown) upon rotation of the spindle and impeller, a coupling 15 secured to the other end of the spindle for connection to a drive pulley or other rotary driving means, an end face seal 16 between the bearing and the hub of the impeller, and a radial seal 17 between the bearing and the spindle.

The bearing 13 comprises an outer ring 20 which is mounted as an interference fit in a bore 21 in the body of the pump, and two spaced apart rows of balls 22 arranged to roll around grooved tracks 23 on the surface of the spindle and around grooved tracks 24 in the outer bearing ring 20, each row of balls having a cage 25. The end portion of the bearing ring adjacent the suction chamber of the pump is cut away on its outer surface to form an end section 26 of smaller diameter than that of the bore 21, with the outer surface of the end section formed with an annular recess 27 spaced from the end of the bearing ring, for a purpose described hereinafter.

The end face seal 16 comprises a collar 30 mounted on the spindle for rotation therewith, a non-rotating axially expandable tubular housing consisting of an outer telescopic member 32 mounted on the outer bearing ring 20 and an inner telescopic member 33 splined to the member 32; a coil spring 34 compressed between the two telescopic members, and a retaining sleeve 36 fast with the collar.

The collar 30 comprises an annular body of elastomeric material, and the retaining sleeve 36 is formed of pressed sheet metal and has one end portion thereof formed with an outwardly projecting radial flange 37, this end portion of the sleeve and the flange being embedded in the collar. A ceramic ring 38 is also embedded in the collar and forms an end face 39 on the collar. The collar is an interference fit on the spindle and engages flat against the hub of the impeller. The portion of the retaining sleeve 36 which is not embedded in the collar is flared in the direction away from the collar and terminates in an outwardly directed lip 40 which functions as a flinger during operation of the pump.

The outer telescopic member 32 comprises an annular body 42 of elastomeric material and a reinforcing ring 43 of pressed sheet metal embedded in the body 42. The annular body 42 is formed at one end thereof with an axial flange 44 having a bead 45 which is engaged as a snap fit in the recess 27 in the end section 26 of the bearing ring. The inner surface of the annular body 42 has a cylindrical portion 46 which houses an end of the coil spring 34 and an inwardly directed radial flange 47 which forms an abutment for the spring. The reinforcing ring 43 is of angle section and has one limb embedded in the flange 44 and the other limb embedded in the flange 47 of the annular body 42. The end of the annular body 42 remote from the bearing is formed with a bellows section 48 which terminates in an enlarged head 49 in contact with the inner telescopic member 33.

The body 42 and flange 44 of the outer telescopic member have a cylindrical outer surface which in the free state has a diameter slightly larger than that of the bore 21 in the pump body so that, when fitted in the pump, the flange 44 is compressed between the end section 26 of the bearing ring and the wall of the bore to provide a fluid-tight seal therebetween. The part of the body 42 surrounding the reinforcing ring 43 is also compressed against the wall of the bore and provides a fluid-tight seal on each side of an annular water collection groove 50 in the wall of the bore. The body 42 and the reinforcing ring are formed with radial drainage holes 51 which open into the collection groove 50, and the body of the pump is formed with drainage duct 52 leading away from the groove 50.

The inner telescopic member 33 has an end face 55 which engages flat against the end face 39 on the ceramic ring of the collar 30. The end portion of the member 33 remote from face 55 is formed with axially extending fingers or splines 56 which engage in corresponding grooves in the body 42 of the outer telescopic member to permit relative axial movement between the two members 32, 33 while preventing relative rotational movement therebetween. The inner surface of the member 33 is formed with a shoulder 57 which forms an abutment for the adjacent end of the coil spring. The outer surface of the member 33 adjacent face 55 has a frusto-conical face 58 which is in sealing contact with a corresponding frusto-conical face 59 on the underside of the head 49 on the bellows section of the outer telescopic member. The faces 58, 59

- 9 -

are held in contact with one another by a garter spring 60 which encircles the head 49 on the bellows section.

The radial seal 17 comprises an annular body 65 of elastomeric material and a reinforcing ring 66 of pressed sheet metal embedded in the body 65. The body of seal 17 is an interference fit on the inside surface of the bearing ring 20 and has an inwardly projecting lip 67 which makes sealing contact with the surface of the spindle.

The end face seal 16 is arranged so that, when it is in a free state prior to assembly in the pump, the retaining sleeve 36 holds the components of the seal together as a self-contained unit with the spring 34 urging the two telescopic members 32, 33 apart with the inner member 33 engaged against the ring 38 mounted on the collar 30 and the flange 47 on the outer member 32 engaged against the lip 40 on the retaining sleeve. The end face seal, when in the free state, can be connected to the bearing ring 20 with the bead 45 engaged as a snap fit in the recess 27, so that the spindle, bearing, radial seal and the end face seal form a standard self-contained assembly which can be supplied to pump manufacturers ready to be mounted in a pump body and fitted with an impeller and a drive pulley.

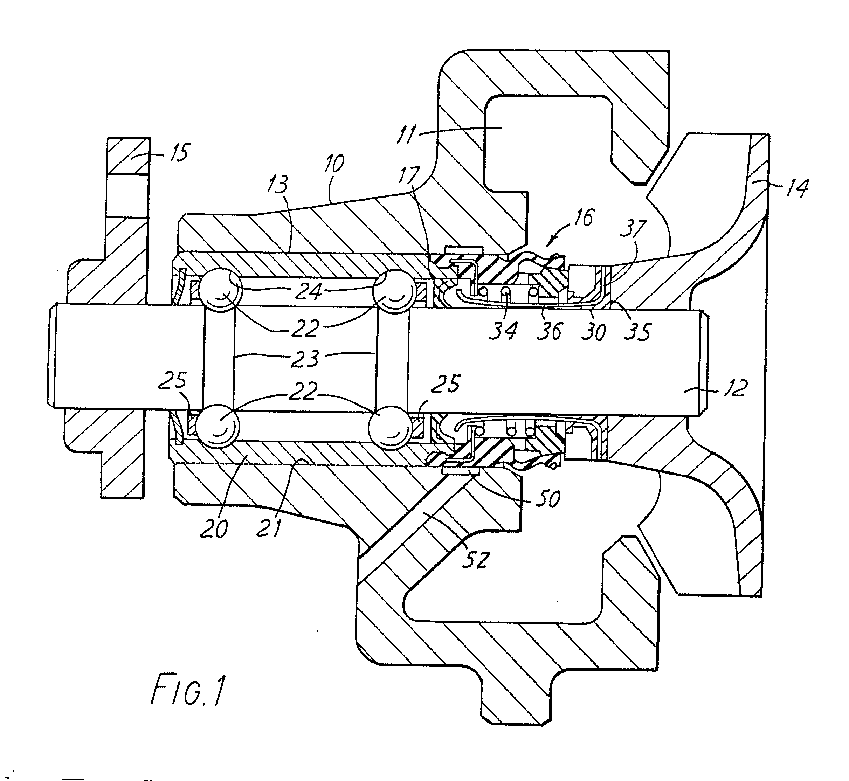

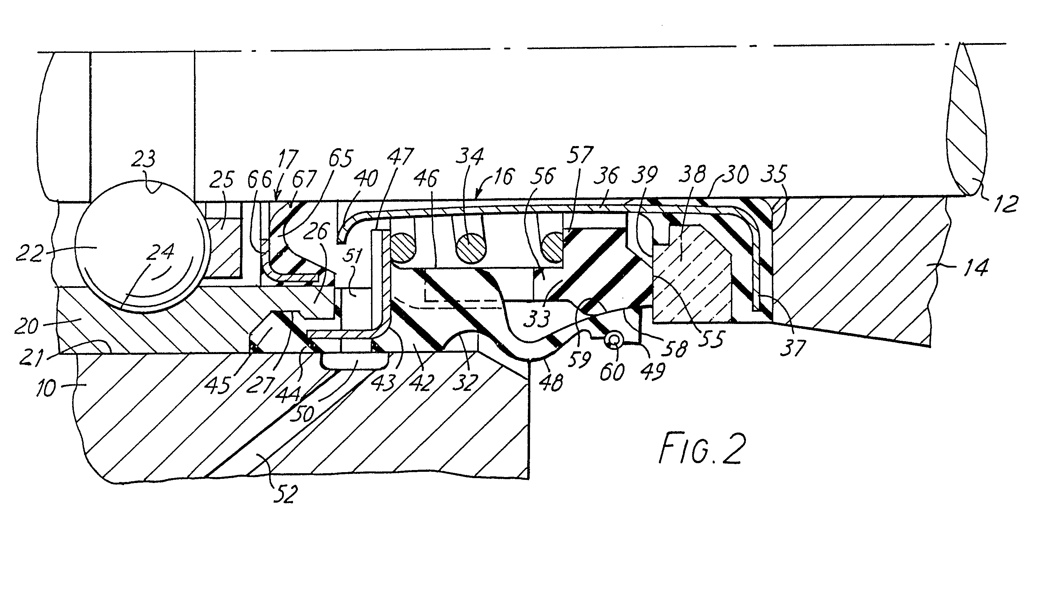

When assembled in a pump, the components of the end face seal are in the relative positions shown in Figures 1 and 2 in which the expandable housing comprising the telescopic members 32, 33 is compressed between the collar 30 and the bearing ring 20 so as to disengage the lip 40 on the retaining sleeve from the flange 47 on the outer telescopic member 32. The collar is a fluid-tight fit against the spindle and the hub of the impeller, and the frictional resistance between the collar and both the spindle and the impeller causes the collar together with the retaining sleeve to rotate with the spindle. The two telescopic members 32, 33 are firmly secured against rotation by the compression of the flange 44 between the bearing ring 20 and the wall of the bore 21 in the pump body. Thus in operation the end face 55 on the telescopic member 33 forms a stationary annular sealing face which is in fluid-tight sliding contact with a rotating counter-sealing face formed by the end face 39 on the ceramic ring 38. Any fluid which may leak past the sealing faces flows along the rotating retaining sleeve 36, which as explained above is flared in the direction towards the bearing, and when the fluid reaches the lip 40 it is thrown radially outwards. The lip 40 is positioned so that the fluid is thrown towards the drain holes 51 in the outer telescopic member 32.

The telescopic member 32 and the body of the collar 30 can conveniently be made of nitrile rubber, and the telescopic member 33 made of graphite impregnated phenolic resin. The ring 38 may be made of stainless steel or sintered stainless steel impregnated with plastics. The retaining sleeve 36 may be made of corrosion protected steel or bronze sheet. The coil spring 34 is preferably provided with a protective coating against corrosion.

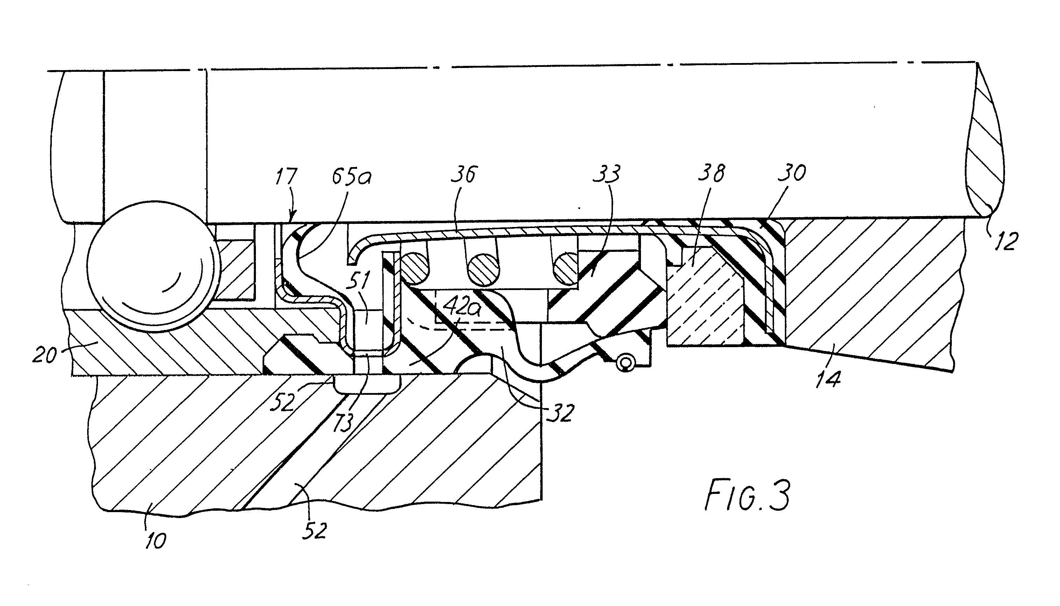

The pump shown in Figure 3 is the same as that shown in Figures 1 and 2 except that the body 65a of the radial seal is formed integral with the body 42a of the outer telescopic member and a single annular element 73 reinforces both the body of the radial seal and the body of the outer telescopic member. The reinforcing element 73 is exposed along the junction between the radial seal and the outer telescopic member and provides a metal to metal abutment between the end face seal and the outer bearing ring.

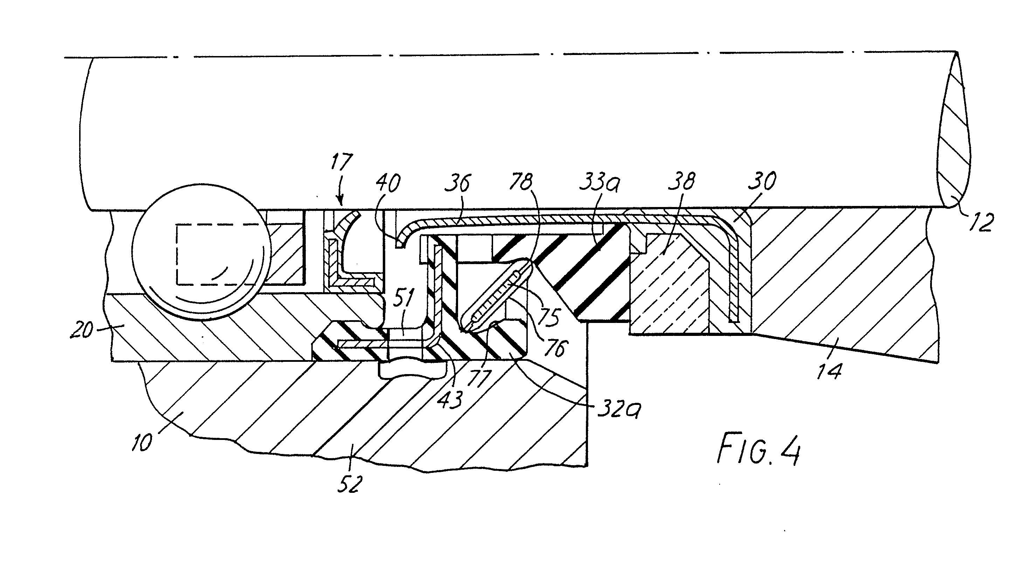

The pump shown in Figure 4 is also the same as that shown in Figures 1 and 2 except that the coil spring of Figures 1 and 2 is replaced by a flared disc spring 75 enclosed in a fluid-tight casing 76, the spring being compressed between two opposing annular concave surfaces 77, 78 on the two telescopic members 32a, 33a. The casing 76 forms a fluid-tight seal with the concave surfaces, thereby avoiding the need to have a bellows section for providing a fluid-tight seal between the two telescopic members. The arrangement of Figure 4 has the advantage that the total axial space occupied by the end face seal can be reduced over that used by the arrangements of Figures 1, 2 and 3. The radial seal in the arrangement of Figure 4 can of course be integral with the outer telescopic member as in the arrangement of Figure 3.

CLAIMS:

1.    A rotary pump comprising an impeller secured on a spindle rotatably mounted in a bearing in the body of the pump, the bearing comprising an outer bearing ring supported in the pump body and rolling elements rotatably mounting the spindle in the outer bearing ring, and sealing means for sealing the fluid within the pump, wherein the sealing means comprises an axially expandable tubular housing surrounding the spindle between the outer bearing ring and the impeller, and spring means urging the housing towards an expanded condition, one end of the expandable housing being secured as a fluid-tight fit on the outer bearing ring, and the other end of the expandable housing having an annular sealing face urged by said spring means into sliding contact with an annular counter-sealing face on the impeller or spindle, the expandable housing having one or more apertures in fluid-tight communication with a drainage duct in the pump body for drainage of any fluid which may leak past the cooperating sealing faces into the interior of the expandable housing, and the spindle, bearing and sealing means forming a self-contained assembly which can be fitted as a unit in the body of the pump.

2.    A rotary pump as claimed in claim 1, wherein the end portion of the expandable housing adjacent the outer bearing ring is a fluid-tight fit in a bore in the body of the pump, the aperture or apertures in the housing being formed in said end portion thereof.

3. A rotary pump as claimed in claim 2, wherein the bearing ring has an end section of reduced external diameter, and said end portion of the expandable housing has an annular flange mounted on said end section of the bearing ring, the bearing ring being mounted in a bore in the pump body and the annular flange on the housing being compressed between the end section of the bearing ring and the wall of the bore.

4. A rotary pump as claimed in claim 3, wherein the external surface of said end section of the bearing is formed with an annular recess, and the annular flange on the housing is formed with a bead which engages as a snap-fit in the annular recess.

5. A rotary pump as claimed in any of claims 1-4, in which the fluid sealing means includes a collar mounted on the spindle as a fluid-tight fit against the hub of the impeller for rotation therewith, the collar having said annular counter-sealing face, and a retaining sleeve adapted to hold the expandable housing and collar together with the spring means in compression when the seal is not in use, wherein the retaining sleeve is fast with the collar and extends inside the expandable housing, the sleeve being disengaged from the housing and adapted to act as a flinger arranged to throw radially outwards towards said drainage aperture or apertures any fluid which may leak past the annular sealing faces.

- 14 -

6.    A rotary pump as claimed in claim 5, wherein the collar comprises a ring of elastomeric material and an annular element embedded in the ring and providing said counter-sealing face, and the retaining sleeve has one end thereof embedded in the ring of elastomeric material.

7.    A rotary pump as claimed in claim 6, wherein the end portion of the retaining sleeve remote from the collar is flared outwardly in the direction away from the collar and terminates in an out-turned lip, the drainage aperture or apertures in the housing being positioned radially outwards from the lip to receive fluid thrown therefrom when the pump is in use.

8.    A rotary pump as claimed in any of claims 1-7, wherein the housing comprises two telescopic members and the spring means is compressed between the two members.

9.    A rotary pump as claimed in claim 8, wherein the inner telescopic member has a frusto-conical external surface and the outer telescopic member has a bellows section which terminates in a head having a frusto-conical internal surface in sealing contact with the frusto-conical surface on the inner member, the two frusto-conical surfaces being held in contact with one another by a garter spring surrounding the head on the bellows section.

10.    A rotary pump as claimed in claim 8, wherein the spring means comprises a flared disc spring enclosed in a fluid-tight casing, the spring being compressed between two opposing annular concave surfaces on the two members and the casing of the spring forming a fluid-tight seal with the concave surfaces.

11.　A rotary pump as claimed in any of the preceding claims, in which the bearing ring is fitted with a radial seal comprising a ring of elastomeric material having an annular lip in sliding contact with the spindle, wherein the end portion of the expandable housing adjacent the bearing ring is formed of elastomeric material and is integral with the radial seal.

12.　A rotary pump as claimed in claim 11, wherein the elastomeric end portion of the expandable housing adjacent the bearing ring is reinforced by a stiffener embedded therein, the stiffener extending into and reinforcing the elastomeric ring of the radial seal.

13.　An end face seal for a rotary pump, comprising an axially expandable tubular housing one end portion of which is cylindrical and adapted to be mounted as a close fit in a bore in the pump body and the other end portion of which is formed with an annular sealing face, a collar having an annular counter-sealing face in sliding contact with the annular sealing face on the housing, spring means urging the expandable housing towards an axially expanded condition, and a retaining sleeve adapted to hold the housing and collar together with the spring means in compression when the seal is not in use, wherein the retaining sleeve is fast with the collar and extends inside the expandable housing, the sleeve being adapted to become disengaged from the housing when the seal is fitted around the spindle assembly of a pump with the collar mounted as a fluid-tight fit against the hub of the impeller and the housing compressed between the collar and the bearing ring, and the retaining sleeve being adapted to act as a flinger arranged to throw radially outwards any fluid which may leak past the annular sealing face.

FIG.1

FIG.2

FIG. 3

FIG.4

European Patent Office

**EUROPEAN SEARCH REPORT**

EP 82 30 1144

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| A | DE - A - 2 729 928 (SOCIETE INTER-NATIONALE DE MECANIQUE INDUS-TRIELLE S.A.)  * page 10, lines 17-24; page 12, lines 1-5; page 13, lines 27-30 page 11, lines 14-21; figures 1,2,4,5,6,7,8 * | 1,3,5, 6,7, 13 | F 04 D 29/12 F 16 J 15/36 |
| A | GB - A - 1 312 528 (CONCENTRIC PUMPS LTD.)  * figure 1 * | 1,2 | |
| A | FR - A - 1 525 115 (RENAULT ET PEUGEOT)  * figure 1 * | 1,2 | TECHNICAL FIELDS SEARCHED (Int.Cl.³)  F 01 P F 04 D F 16 J |
| A | DE - B - 1 251 659 (KARL SCHMIDT)  * column 2, lines 40-45; figure * | 1,2,3, 4 | |
| A | FR - A - 2 371 619 (KUPFER-ASBEST CO.)  * page 5, lines 6, 28-30; figure 1 * | 8,12, 13 | CATEGORY OF CITED DOCUMENTS |

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | | |
|---|---|---|---|
| Place of search | Date of completion of the search | Examiner | |
| The Hague | 27-05-1982 | WOOD | |

EPO Form 1503.1   06.78